# EUROPÄISCHE PATENTANMELDUNG

(11) **EP 1 010 568 A2**
(43) Veröffentlichungstag der Anmeldung: **21.06.2000**
(21) Anmeldenummer: 99123949.2
(22) Anmeldetag: 03.12.1999
(51) Int. Cl.: B60K 37/02

(54) **Einbauaggregat für ein Kraftfahrzeug**

(30) Priorität: 15.12.1998 DE 19857836
(71) Anmelder: Mannesmann VDO Aktiengesellschaft, 60388 Frankfurt am Main (DE)
(72) Erfinder: Winterkorn, Horst, 35435 Wettenberg-Wissmar (DE)
(74) Vertreter: Klein, Thomas, Dipl.-Ing.

(57) **Zusammenfassung**

Ein Einbauaggregat für ein Kraftfahrzeug umfasst ein in eine Armaturentafel (1) für den Betrachter unsichtbar eingesetztes Grundelement (2) und beliebig austauschbare Funktionselemente (5, 6). Diese erlauben eine problemlose nachträgliche Ergänzung gewünschter Funktionen und können in verschiedene Kraftfahrzeuge eingesetzt werden. Das Grundelement (2) umfasst eine zentrale Steuereinheit, die neben der Software der Funktionselemente (5, 6) auch die Betriebsdaten des Kraftfahrzeuges erfasst und so eine Bereitstellung umfassender Funktionen ermöglicht. Dadurch kann ein vorhandenes Kraftfahrzeug schnell mit entsprechenden Funktionen nachgerüstet und zugleich der mit dem Einbau der einzelnen Funktionselemente (5, 6) verbundene Aufwand durch die Nutzung der zentralen Steuereinheit des Grundelementes (2) reduziert werden.

## Beschreibung

Die Erfindung betrifft ein elektrisches Einbauaggregat für ein Kraftfahrzeug, welches als Ein-/Ausgabegerät für Zusatzfunktionen ausgeführt ist.

Solche Einbauaggregate beherrschen zunehmend den Innenraum des modernen Kraftfahrzeuges. Hierbei dienen die Einbauaggregate beispielsweise der Darstellung von Informationen, beispielsweise des Betriebszustandes oder des Verkehrsgeschehens, bedienen sich zunehmend aber auch modernerer Medien, insbesondere einer Mobiltelefonanlage, mittels derer über weltweite Datenkanäle eine nahezu unerschöpfliche Datenmenge abrufbar ist.

Neben den inzwischen häufig serienmäßigen Einbauaggregaten, insbesondere dem Autoradio, werden andere Einbauaggregate, beispielsweise Satellitennavigationssysteme, nur von einer Minderheit der Kraftfahrzeugführer genutzt. Die Vielfalt der optional installierbaren Einbauaggregate ist inzwischen unüberschaubar, wobei der Käufer des Kraftfahrzeuges eine beliebige, individuelle Auswahl treffen kann.

Alle Einbauaggregate haben gemeinsam den Nachteil, dass sie nur mit erheblichem Aufwand austauschbar sind. Insbesondere ist hierbei eine Nachrüstung herstellerseitig nicht vorhandener Funktionen oftmals nur von Fachleuten durchführbar und ist daher zumeist auch mit einem Werkstattaufenthalt verbunden. Neben einer uneinheitlichen Gestaltung von Anschlusselementen bereitet auch die nicht standardisierte Baugröße und Bauform erhebliche Schwierigkeiten, wobei neben einer einwandfreien technischen Funktion auch das Erscheinungsbild der dem Benutzer zugewandten Oberfläche mit vorhandenen Elementen harmonieren soll. Demgegenüber tragen offensichtlich nachgerüstete Geräte im allgemeinen nicht zu einer Wertsteigerung bei und vermitteln häufig einen minderwertigen Eindruck. Aufgrund der genannten Nachteile schrecken viele Kraftfahrzeugbesitzer davor zurück, nützliche Extras nachzurüsten oder auszutauschen und stellen diese Wünsche bis zum Erwerb eines neuen Kraftfahrzeuges zurück.

Weiterhin ist der Bedarf für eine bestimmte Funktion oftmals lediglich vorübergehend, so dass die Anschaffungskosten und der zeitlich begrenzte Nutzen in einem ungünstigen Verhältnis zueinander stehen. Beispielsweise ist ein Satelliten-Navigations-System von Fall zu Fall sehr hilfreich, bei den meisten Fahrten jedoch entbehrlich.

Der Erfindung liegt das Problem zugrunde, ein Einbauaggregat der eingangs genannten Art so zu gestalten, dass ein flexibler Einsatz und Austausch ermöglicht wird. Insbesondere soll dabei ein Austausch von Einbauaggregaten entsprechend der fortschreitenden Technik problemlos möglich sein.

Dieses Problem wird erfindungsgemäß dadurch gelöst, dass das Einbauaggregat ein Grundelement mit einer zentralen Steuereinheit hat, an welches unterschiedliche Funktionselemente anschließbar sind. Hierdurch ist es möglich, dem im Kraftfahrzeug vorhandenen Grundelement bedarfsgerecht ein jeweils gewünschtes Funktionselement hinzuzufügen. Hierdurch lassen sich mühelos eine Vielzahl von Funktionselementen ergänzen, ohne dass hierzu ein aufwendiger Eingriff im Innenraum des Kraftfahrzeuges erforderlich ist. Dabei nutzen die einzelnen Funktionselemente im wesentlichen die zentrale Steuereinheit, die insbesondere auch einen Mikroprozessor aufweist, des Grundelementes, so dass alle wesentlichen Daten innerhalb dieser Steuereinheit zusammenlaufen und unmittelbar zur Weiterverarbeitung zur Verfügung stehen, während die Funktionselemente keine eigene Steuereinheit benötigen. Das Auswechseln bzw. Ergänzen der Funktionselemente ist daher ohne einen Werkstattaufenthalt vom jeweiligen Benutzer des Kraftfahrzeuges selbst durchführbar. Weiterhin können die Funktionselemente durch ihre flexible Verwendungsmöglichkeit beispielsweise gemietet bzw. geleast oder innerhalb einer Fahrzeugflotte getauscht werden. Es ist dadurch einer Autovermietung möglich, innerhalb kurzer Zeit das Kraftfahrzeug mit den vom Kunden gewünschten Funktionselementen auszustatten.

Hierbei kann eine manuelle Konfiguration des Funktionselementes zum Anschluss an das Grundelement erforderlich sein. Besonders günstig ist hingegen eine Ausführungsform der Erfindung, bei der das Grundelement zur Identifikation des Funktionselementes ausgeführt ist. Hierdurch genügt lediglich der elektrische Anschluss des Funktionselementes an das Grundelement. Die Identifikation des Funktionselementes und die damit verbundene Einbindung und Bereitstellung der zugehörigen Funktionen erfolgt anschließend ohne einen manuellen Eingriff des Benutzers.

Dabei ist eine Weiterbildung der Erfindung besonders vorteilhaft, bei der das Grundelement Mittel zur Identifikation des Funktionselementes selbsttätig nach jedem Startvorgang hat. Hierdurch stehen nach einem erneuten Startvorgang des Kraftfahrzeuges die jeweils vorhandenen Funktionselemente zur Verfügung. Somit sind Änderungen während der Fahrt, die zu einer Gefährdung des Fahrers führen könnten, ausgeschlossen. Zugleich ist die Nutzung hinzugefügter Funktionselemente unmittelbar nach einem erneuten Startvorgang möglich.

Dabei könnte jedes Funktionselement ein eigenständig betriebsbereites Bauelement sein. Besonders effektiv ist jedoch eine Ausführungsform der Erfindung, bei der das Funktionselement eine eigene Software aufweist, die von dem Grundelement erfassbar ist. Dadurch kann für das Funktionselement eine eigene Steuereinheit entfallen. Es ist deshalb ohne großen Aufwand herstellbar und kann geringe Abmessungen aufweisen.

Dabei ist eine besonders einfache Weiterbildung der Erfindung dann gegeben, wenn die dem jeweiligen Funktionselement zugeordnete Software mittels einer Funkverbindung abrufbar ist. Dadurch braucht lediglich das angeschlossene Funktionselement identifiziert zu werden und anschließend eine Funkverbindung zu einer zentralen Speichereinheit aufgebaut zu werden. Von dort wird anschließend die zur Ausführung der gewünschten Funktion erforderliche Software übermittelt und im Hintergrund - d.h. ohne dass die Funktionsfähigkeit des Grundelements zu irgendeiner Zeit beeinträchtigt wird - installiert. Diese kann daher vom Hersteller leicht auf einem aktuellen Stand gehalten werden, so dass beispielsweise digitalisierte Straßenkarten für ein Satellitennavigationssystem (GPS) weitgehend fehlerfrei sind.

Besonders nützlich ist es dabei auch, wenn die Funkverbindung mittels einer Mobiltelefonanlage herstellbar ist. Dadurch können in einfacher Weise Daten des Herstellers übertragen und so die erforderliche Software und weitere spezifische Daten des Funktionselementes übertragen werden. Dabei besteht auch zugleich die Möglichkeit, eine vom Fahrer unabhängige Aktualisierung der Daten vorzunehmen.

Besonders vorteilhaft ist auch eine Weiterbildung der Erfindung, bei der das Funktionselement bei unterschiedlichen Kraftfahrzeugen einsetzbar ist. Hierdurch kann das Funktionselement bei einem Wechsel des Kraftfahrzeuges weiter verwendet werden. Eine individuelle, zusammengesetzte Einheit von verschiedenen Funktionselementen mit entsprechenden Einstellungen steht daher in dem neuen Kraftfahrzeug dem Benutzer sofort in gewohnter Weise zur Verfügung, wodurch die Eingewöhnungsphase erheblich verkürzt werden kann. Zugleich können dadurch die Anschaffungskosten eines Kraftfahrzeuges durch Wiederverwendung des Funktionselementes wesentlich reduziert werden, wobei die Entscheidung über den Kauf weiterer Funktionselemente unabhängig vom Zustand des Kraftfahrzeuges getroffen werden kann.

Die Kontaktierung des Funktionselements könnte bspw. schraub- oder klipsbar sein. Es ist aber besonders praktisch, wenn das Funktionselement mittels einer Steckverbindung mit dem Grundelement kontaktierbar ist. Dadurch lässt sich der Anschluss eines Funktionselementes auch von einem Laien problemlos vornehmen. Das Grundelement ist hierzu beispielsweise in einem vom Innenraum des Kraftfahrzeuges aus zugänglichen und somit bei einem möglichen Unfall vor Deformation und Beschädigung geschützten Bereich der vorderen Armaturentafel oder in einem anderen deformationssicheren Bereich des Fahrzeugs wie z.B. im Bereich der Fahrzeugrückbank angeordnet.

Hierbei ist es besonders vorteilhaft, wenn mittels des Grundelementes zusätzlich Betriebsdaten des Kraftfahrzeuges speicherbar sind. Hierdurch kann das Grundelement zugleich auch zur Auswertung von Betriebsdaten herangezogen werden, um so beispielsweise die Funktion eines Unfalldatenschreibers zu erfüllen. Zugleich können auch personenbezogene Daten gespeichert und bevorzugte individuelle Einstellungen des Funktionselementes abgerufen werden.

Das Funktionselement kann aus lediglich einem elektronischen Bauelement bestehen, das mit dem Grundelement kontaktiert wird und mittels vorhandener Eingabeelemente bedienbar ist. Eine besonders zweckmäßige Ausführungsform der Erfindung ist hingegen dann gegeben, wenn das Funktionselement eine eigene Benutzeroberfläche aufweist. Diese erlaubt eine auf das Funktionselement abgestimmte Gestaltung der Bedienelemente, wodurch die Bedienung vereinfacht und eine Mehrfachbelegung vorhandener Bedienelemente, die anderenfalls jeweils um die Bedienfunktionen jedes weiteren Funktionselementes ergänzt werden müssten, eingeschränkt werden kann. Die Benutzeroberfläche kann beispielsweise lediglich eine Darstellungsebene aufweisen oder auch mit unterschiedlichen Ein-/Ausgabeelementen ausgestattet sein.

Eine andere Weiterbildung der Erfindung ist dadurch besonders vorteilhaft, dass das Grundelement eine austauschbare Steuereinheit aufweist. Hierdurch kann die Rechenleistung der Steuereinheit dem fortschreitenden technologischen Standard angepasst und somit die Leistungsfähigkeit des Grundelementes und auch der angeschlossenen Funktionselemente erheblich gesteigert werden. Zugleich kann im Falle einer Beschädigung eine problemlose Reparatur vorgenommen werden. Die Steuereinheit kann hierzu ähnlich der Funktionselemente mittels Steckverbindung mit dem Grundelement verbunden sein.

Eine andere vorteilhafte Weiterbildung der Erfindung ist dann gegeben, wenn das Grundelement ein Diagnosesystem aufweist. Hierdurch können aufgetretene Funktionsstörungen schnell erfasst und auf Basis dieser Daten eine schnelle Reparatur durchgeführt werden. Dabei können beispielsweise neben den Daten des Funktionselementes auch Betriebsdaten des Kraftfahrzeuges erfasst werden, so dass alle wesentlichen Daten in dem Grundelement verfügbar sind. Außerdem können die erfassten Daten mit in einer Datenbank abgespeicherten Informationen verglichen und entsprechende Hinweise an den Bediener gegeben werden.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer Prinzipdarstellung in
- Fig. 1: eine Armaturentafel eines Kraftfahrzeuges mit verschiedenen Funktionselementen,
- Fig. 2: ein erfindungsgemäßes Grundelement.

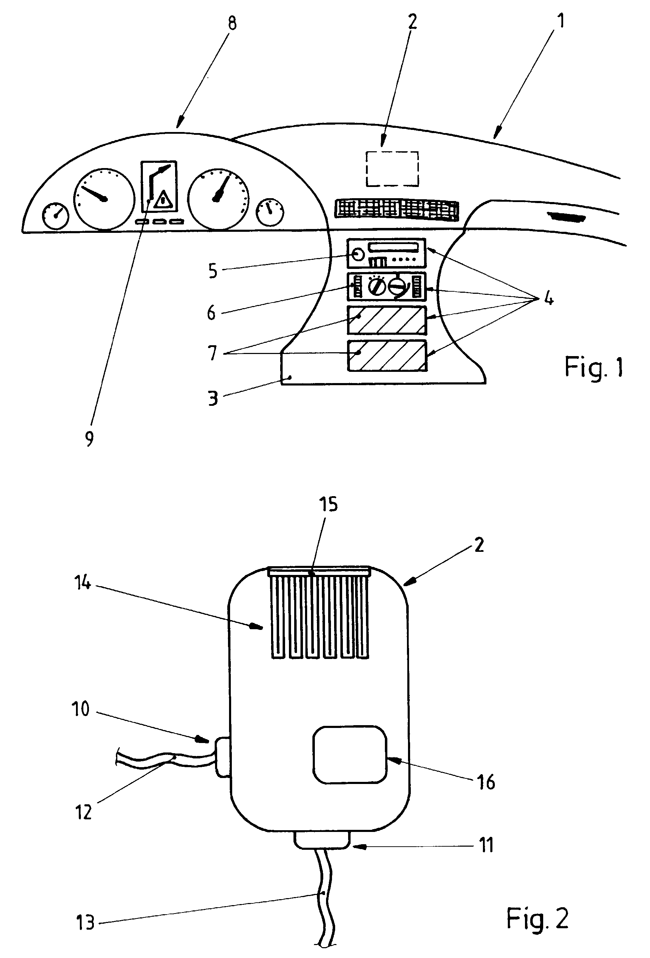

Figur 1 zeigt in einer Vorderansicht eine Armaturentafel 1 eines nicht weiter dargestellten Kraftfahrzeuges. Für einen Betrachter unsichtbar im Inneren der Armaturentafel 1 ist ein Grundelement 2 vor Beschädigung geschützt angeordnet. Damit verbunden sind verschiedene, an einer Mittelkonsole 3 der Armaturentafel 1 angeordnete Aufnahmen 4, in die in der dargestellten Ausführungsform ein als Radiogerät ausgeführtes Funktionselement 5 und ein als Klimaautomatik ausgeführtes Funktionselement 6 eingesetzt sind oder die mittels einer Abdeckkappe 7 verschlossen sind. Andere Funktionselemente, die keine eigene Benutzeroberfläche erfordern, können in das Grundelement 2 unmittelbar eingesetzt werden und erweitern so die Funktion von herstellerseitig vorhandenen Anzeigeeinheiten 8. Beispielsweise kann ein Satellitennavigationssystem ergänzt werden, das mittels nicht dargestellter mehrfach belegbarer Bedienelemente betätigbar ist und dessen Informationen mittels eines Displays 9 darstellbar sind. Sowohl die Funktionselemente ohne eigene Benutzeroberfläche als auch die mit dem Grundelement 2 kontaktierbaren Funktionselemente 5, 6 lassen sich mittels einer nicht dargestellten Steckverbindung mühelos manuell austauschen. Das Grundelement 2 liest die Daten des Funktionselementes ein und stellt die erweiterten Funktionen anschließend zur Verfügung. Zum Schutz gegen Diebstahl oder bei einem Wechsel des Kraftfahrzeuges können die Funktionselemente 5, 6 der Aufnahme 4 leicht entnommen werden.

Figur 2 zeigt den prinzipiellen Aufbau des Grundelementes 2. Das Grundelement 2 weist zwei Steckverbindungen 10, 11 mit einer Anschlussleitung 12 für ein nicht dargestelltes Diagnosesystem und mit einer Anschlussleitung 13 für die in Figur 1 dargestellten Funktionselemente 5, 6 auf. Die Anschlussleitungen 12, 13 weisen jeweils Kupfer- oder Glasfaserkabel auf. Das Grundelement 2 hat mehrere Steckkartenplätze 14 für weitere Funktionselemente, welche mittels einer Steckleiste 15 kontaktierbar sind. Die Steckleiste 15 ist zur Anpasung an die jeweils erforderliche Verbindungstechnik und Norm austauschbar. Eine zentrale Steuereinheit 16 des Grundelementes 2 erfasst die Funktionen des entweder mit dem Steckkartenplatz 14 oder der Anschlussleitung 13 verbundenen Funktionselementes und stellt diese dem Benutzer entsprechend zur Verfügung.

## Patentansprüche

1. Elektrisches Einbauaggregat für ein Kraftfahrzeug, welches als Ein-/Ausgabegerät für Zusatzfunktionen ausgeführt ist, **dadurch gekennzeichnet,** dass das Einbauaggregat ein Grundelement (2) mit einer zentralen Steuereinheit (16) hat, an welches unterschiedliche Funktionselemente (5, 6) anschließbar sind.

2. Einbauaggregat nach Anspruch 1, **dadurch gekennzeichnet,** dass das Grundelement (2) zur Identifikation des Funktionselementes (5, 6) ausgeführt ist.

3. Einbauaggregat nach Anspruch 1 oder 2, **dadurch gekennzeichnet,** dass das Grundelement (2) Mittel zur Identifikation des Funktionselementes (5, 6) selbsttätig nach jedem Startvorgang hat.

4. Einbauaggregat nach einem der vorhergehenden Ansprüche, **dadurch gekennzeichnet**, dass das Funktionselement (5, 6) eine eigene Software aufweist, die von dem Grundelement (2) erfassbar ist.

5. Einbauaggregat nach einem der vorhergehenden Ansprüche, **dadurch gekennzeichnet,** dass die dem jeweiligen Funktionselement (5, 6) zugeordnete Software mittels einer Funkverbindung abrufbar ist.

6. Einbauaggregat nach Anspruch 5, **dadurch gekennzeichnet,** dass die Funkverbindung mittels einer Mobiltelefonanlage herstellbar ist.

7. Einbauaggregat nach einem der vorhergehenden Ansprüche, **dadurch gekennzeichnet,** dass das Funktionselement (5, 6) bei unterschiedlichen Kraftfahrzeugen einsetzbar ist.

8. Einbauaggregat nach einem der vorhergehenden Ansprüche, **dadurch gekennzeichnet,** dass das Funktionselement (5, 6) mittels einer Steckverbindung (10, 11) mit dem Grundelement (2) kontaktierbar ist.

9. Einbauaggregat nach einem der vorhergehenden Ansprüche, **dadurch gekennzeichnet,** dass mittels des Grundelementes (2) zusätzlich Betriebsdaten des Kraftfahrzeuges speicherbar sind.

10. Einbauaggregat nach einem der vorhergehenden Ansprüche, **dadurch gekennzeichnet,** dass das Funktionselement (5, 6) eine eigene Benutzeroberfläche aufweist.

11. Einbauaggregat nach einem der vorhergehenden Ansprüche, **dadurch gekennzeichnet,** dass das Grundelement (2) eine austauschbare Steuereinheit (16) aufweist.

12. Einbauaggregat nach einem der vorhergehenden Ansprüche, **dadurch gekennzeichnet,** dass das Grundelement (2) ein Diagnosesystem aufweist.
